# EUROPÄISCHE PATENTSCHRIFT

(11) **EP 0 708 541 B1**
(45) Veröffentlichungstag und Bekanntmachung des Hinweises auf die Patenterteilung: **20.09.2006**
(21) Anmeldenummer: 95202717.5
(22) Anmeldetag: 10.10.1995
(51) Int. Cl.: H04J 3/07

(54) **Übertragungssystem mit einem Regelkreis**
Transmission system with a controlling loop
Système de transmission avec une boucle de commande

(30) Priorität: 18.10.1994 DE 4437136
(43) Veröffentlichungstag der Anmeldung: 24.04.1996
(73) Patentinhaber: LUCENT TECHNOLOGIES INC., Murray Hill, New Jersey 07974-0636 (US)
(72) Erfinder: Urbansky, Ralph, Dr. Ing., c/o Philips, D-22335 Hamburg (DE)
(74) Vertreter: Sarup, David Alexander

(56) Entgegenhaltungen:
- EP-A- 0 435 384
- EP-A- 0 507 385
- EP-A- 0 630 127
- WO-A-93/16536
- SPEAKERS' PAPERS. 6TH WORLD TELECOMMUNICATION FORUM. PART 2. TECHNICAL SYMPOSIUM. INTEGRATION, INTEROPERATION AND INTERCONNECTION: THE WAY TO GLOBAL SERVICES, GENEVA, SWITZERLAND, 10-15 OCT. 1991, 1991, GENEVA, SWITZERLAND, INT. TELECOMMUN. UNION, SWITZERLAND, Seiten 45-49 vol.3, URBANSKY R ET AL 'Simulation results and field trial experience of justification jitter (SDH networks)'

## Beschreibung

Die Erfindung bezieht sich auf ein Übertragungssystem mit einem Regelkreis, das einen Vergleicher zum Vergleich eines ersten Eingangssignals und eines zweiten Eingangssignals enthält und ein Ausgangssignal abgibt, das dem Regelkreis zugeführt wird.

Ein solches Übertragungssystem kann beispielsweise zur Übertragung von Signalen der synchronen digitalen Hierarchie (SDH) dienen. Hierbei werden z.B. in einem Multiplexer verschiedene plesiochrone oder auch synchrone Signale (z.B. STM-1-Signal) beispielsweise zu einem STM-16-Signäl (STM = synchrones Transportmodul) zusammengefaßt. In dem Multiplexer wird dabei jeweils in einer Synchronisierschaltung eine Taktanpassung zwischen einem ankommenden Signal und einem abgehenden Signal durchgeführt. Die zur Taktanpassung notwendigen Stopfvorgänge werden mittels Pointerbytes vorgenommen. Solche Stopfvorgänge werden in der synchronen digitalen Hierarchie auch als Pointeraktionen bezeichnet.

In einem Demultiplexer des Übertragungssystems werden dann mittels Desynchronisierschaltungen die plesiochronen oder synchronen Signale zurückgewonnen. Aufgrund der Rahmenstrukur und der Pointeraktionen entstehen Phasenfehler zwischen dem Eingangssignal und dem Ausgangssignal des Übertragungssystems.

Das oben genannte Übertragungssystem ist aus der EP-0 507 385 A2 oder aus dem Aufsatz "Network synchronization - A Challenge for SDH-SONET?" von M.J. Klein und R. Urbansky, IEEE Communications Magazine, September 1993, Vol. 31, No. 9, Seiten 42 bis 50 bekannt. Hierbei wird ein synchronisiertes Signal (STM-i-Signal) der synchronen digitalen Hierarchie an ein Lesetaktsignal angepaßt. Das Lesetaktsignal wird von einem ersten Regelkreis (PLL) mit mindestens einem ersten Vergleicher (Phasendetektor), einem Regler und einem steuerbaren Oszillator erzeugt. Dem ersten Vergleicher wird das Oszillatorsignal (Lesetaktsignal) und beispielsweise ein Steuersignal von einem Netzwerkmanagementsystem des Übertragungssystems zugeführt.

Zur Taktanpassung des synchronisierten Signals an das Lesetaktsignal werden Stopfwerte in Pointern (Pointeraktion) verarbeitet. Es wird ein Pufferspeicher zur Taktanpassung verwendet, der von einem Schreib- und Lesezähler gesteuert wird. Der Schreibzähler wird von einem Datenanalysator (Pointer-Interpreter) gesteuert, welche die im ankommenden, synchronisierten Signal enthaltenen Stopfwerte aus den Pointerwerten ermittelt. Der Lesezähler ist Bestandteil eines Regelkreises, der aus einem Subtrahierer, einem Tiefpaßfilter, einer Stopfentscheidungsschaltung und einem Datengenerator (Pointer-Generator) besteht. Das Tiefpaßfilter dient zur Verminderung des durch Pointeraktionen im ankommenden Signal hervorgerufenen höherfrequenten Phasenfehlers und des durch die Rahmenstruktur hervorgerufenen Phasenfehlers zwischen dem Eingangs- und Ausgangssignal des Übertragungssystems. In der Stopfentscheidungsschaltung ist ein Integrator vorhanden, der eine Verformung des Jitterspektrums in den höherfrequenten Bereich durchführt (Jitter ist höherfrequenter Phasenfehler). Ein niederfrequenter Phasenfehler läßt sich durch die oben genannten Maßnahmen nicht unterdrücken.

Die Stopfentscheidungsschaltung bildet einen positiven Stopfwert, wenn der vom Integrator gebildete Wert einen positiven Schwellwert überschreitet. Unterschreitet der vom Integrator erzeugte Wert einen negativen Schwellwert, wird von der Stopfentscheidungsschaltung ein negativer Stopfwert gebildet. Der Datengenerator erzeugt Pointerwerte für das abgehende Signal und steuert den Lesezähler in Abhängigkeit von den Stopfwerten und dem STM-1-Rahmen. Der Lesezähler wird bei einer positiven Stopfentscheidung angehalten. Bei einer negativen Stopfentscheidung wird der Lesezähler während eines Rahmens ein Datenbyte eher zum Zählen freigegeben.

Aus WO 93/16536 ist ein Desynchronisierer mit Unterdrückung des Pointerjitters bekannt, wobei eine Steuerschaltung in Abhängigkeit von dem Schreibtakt des Desynchronisierers und weiteren Signalen einen Differenzwert entsprechend Pointerjustierungen erzeugt, der in einer Subtraktionsschaltung von der momentanen Schreibadresse abgezogen wird. Das Phasenjitter wird so von der Basisbandfrequenz auf eine höhere Frequenz umgesetzt, die von einem Tiefpassfilter in der Reglerschleife unterdrückt wird.

Der Erfindung liegt die Aufgabe zugrunde, ein Übertragungssystem zu schaffen, das eine Verminderung des niederfrequenten Phasenfehlers bewirkt.

Die Aufgabe wird durch ein Übertragungssystem mit den Merkmalen des Anspruch 1 gelöst. Ansprüche 2 bis 9 beziehen sich auf eine Ausführungsform mit Eingangszähler und Anpassungsschaltungen und Ansprüche 10 bis 12 auf eine Ausführungsform mit Umsetzerschaltungen und einem Vergleichszähler.

Bei dem erfindungsgemäßen Übertragungssystem wird dem Vergleicher ein Hilfssignal zur "Zustandsänderung" eines oder mehrerer in dem Vergleicher verarbeiteten Signale zugeführt. Die Frequenz des Hilfssignals weicht von der Frequenz des zu ändernden Signals ab. Unter einer Zustandsänderung eines Signals ist z.B. die Verlängerung oder Verkürzung von Impulsen oder Impulspausen oder die Ausblendung oder Vervielfachung von Impulsen in einem Signal zu bestimmten von dem Hilfssignal vorgegebenen Zeitpunkten zu verstehen. Ein erstes oder zweites Vergleichssignal kann auch durch Codierung aus dem ersten oder zweiten Eingangssignal gewonnen werden. Eine Codierung eines Eingangssignals kann z.B. mittels eines Zählers durchgeführt werden. Ein 1-Bit-Ausgangssignal oder eines oder mehrere 1-Bit-Ausgangssignale des Zählers bilden ein Vergleichssignal. Der Zähler liefert also entweder ein serielles Signal von einem 1-Bit-Ausgang des Zählers oder ein oder mehrere serielle Signale von jeweils einem 1-Bit-Ausgang des Zählers als paralleles Signal. Der Vergleicher kann Bestandteil eines Regelkreises beispielsweise zur Erzeugung eines Oszillatorsignals oder eines Stopfwertes für die Steuerung eines Lesezählers sein. Bei einer bestimmten Schaltungsausbildung kann eines der Vergleichssignale aber auch mit dem Eingangssignal identisch sein. Dies bedeutet, dass in dieser besonderen Ausführungsform durch das Hilfssignal eine "Zustandsänderung" nur im ersten oder nur im zweiten Vergleichssignal durchgeführt wird. Eine Zustandsänderung kann anstelle des ersten und zweiten Vergleichssignals auch im Signal, welches durch Kombination der beiden Vergleichssignale gebildet worden ist, durchgeführt werden. Dieses Signal wäre beispielsweise das Ausgangssignal des Vergleichers.

Durch die erfindungsgemäßen Maßnahmen wird der niederfrequente und gegebenenfalls der höherfrequente Phasenfehler vermindert, weil die Abhängigkeit zwischen Phasenfehler und Vergleichssignal, d. h. ein mit dem Hilfssignal beeinflußtes Eingangssignal, reduziert ist. Der Phasenfehler wird so verändert, daß ein in dem Übertragungssystem befindliches Schaltelement den Phasenfehler vermindert. Ein solches Schaltelement ist beispielsweise ein Filter im Regelkreis oder ein Regelkreis in einer Desynchronisierschaltung im Demultiplexer des Übertragungssystems.

Bei der Ausführungsform nach Ansprüchen 13 und 14 enthält der Vergleicher, der beispielsweise Bestandteil eines Phasenregelkreises (PLL) zur Erzeugung eines Oszillatorsignals ist, eine erste Umsetzerschaltung und einen Vergleichszähler. Die erste Umsetzerschaltung ist zur Zuführung des ersten Eingangssignals und des Hilfssignals und zur Bildung eines "zustandsgeänderten" ersten Vergleichssignals vorgesehen. Eine zweite Umsetzerschaltung ist zur Zuführung des zweiten Eingangssignals und des Hilfssignals und zur Bildung eines "zustandsgeänderten", zweiten Vergleichssignals vorgesehen. Der Vergleichszähler dient zum Empfang des von der ersten Umsetzerschaltung erzeugten "zustandsgeänderten", ersten Vergleichssignals an seinem Freigabeeingang und des zweiten Eingangssignals als zweites Vergleichssignal an seinem Takteingang. Der Vergleichszähler dient dann zum Empfang des ersten Eingangssignals an seinem Freigabeeingang und des von der zweiten Umsetzerschaltung erzeugten zweiten Vergleichssignals an seinem Takteingang. Der Vergleichszähler kann auch zum Empfang des von der ersten Umsetzerschaltung erzeugten ersten Vergleichssignals an seinem Freigabeeingang und des von der zweiten Umsetzerschaltung erzeugten zweiten Vergleichssignals an seinem Takteingang benutzt werden. Dieser Vergleicher kann keine "Zustandsänderung" in den kombinierten Vergleichssignalen vornehmen. Der Vergleicher kann in einem Regelkreis einer Synchronisierschaltung oder einer Desynchronisierschaltung verwendet werden.

In einer alterntiven Ausführungsform gemäß Anspruch 11 wird nur eine der beiden Umsetzerschaltungen zur Bildung eines "zustandsgeänderten" Vergleichssignals benutzt.

Die Umsetzerschaltung ist zur Bildung eines "zustandsgeänderten" Vergleichssignals aus einem Eingangssignal vorgesehen, welches im Mittel die gleiche Frequenz oder ein Vielfaches der Frequenz des "zustandsgeänderten" Vergleichssignals aufweist und dessen Flanken zum größten Teil gegenüber den Flanken des "zustandsgeänderten" Signals versetzt sind. In der Umsetzerschaltung wird also gegebenenfalls eine Frequenzteilung und eine Phasenmodulation durchgeführt.

Anspruch 12 betrifft eine Ausführungsform der ersten Umsetzerschaltung, die einen ersten und zweiten Zähler, ein erstes Kippglied und ein UND-Gatter enthält. Der erste Zähler ist zum Empfang eines Eingangssignals und zur Lieferung eines Vergleichssignals von einem 1-Bit-Ausgang des Zählers vorgesehen. Das erste Kippglied dient zum Empfang des Hilfssignals an seinem Takteingang und zum Empfang des vom UND-Gatter abgegebenen Signals an einem Kippeingang, welches eine Kombination des Vergleichssignals und eines Übertragsignals vom zweiten Zähler darstellt. Der zweite Zähler ist zum Empfang des Hilfssignals an seinem Takteingang, zum Empfang des invertierten Ausgangssignals des ersten Kippgliedes an seinem Freigabeeingang, zur Lieferung des Übertragsignals von seinem Übertragausgang und zur Lieferung eines zuständsgeänderten Vergleichssignals von einem 1-Bit-Ausgang des zweiten Zählers bestimmt. Der erste Zähler ist ein Codierer zur Umsetzung eines Eingangssignals in ein Vergleichssignal. Die Zustandsänderung eines Vergleichssignals wird mit dem ersten Kippglied, dem UND-Gatter und dem zweiten Zähler durchgeführt.

Im Fall der Ausführungsform nach Ansprüchen 13 und 14 kann auch die zweite Umsetzerschaltung entsprechend Anspruch 12 ausgebildet werden.

Bei der Ausführungsform nach Ansprüchen 2 bis 10 enthält der Vergleicher einen ersten und zweiten Zähler, eine erste und zweite Anpassungsschaltung und einen Subtrahierer. Der erste Zähler ist zum Empfang des ersten Eingangssignals und zur Lieferung des ersten Vergleichssignals und der zweite Zähler zum Empfang des zweiten Eingangssignals und zur Lieferung des zweiten Vergleichssignals vorgesehen. Die erste und zweite Anpassungsschaltung dienen jeweils zum Empfang des Hilfssignals und des ersten und zweiten Vergleichssignals und zur Zustandsänderung des ersten und zweiten Vergleichssignals. Der Subtrahierer ist jeweils mit dem Ausgang der beiden Anpassungsschaltungen gekoppelt. Dieser Vergleicher kann in einem Phasenregelkreis zur Erzeugung eines Oszillatorsignals oder in einem Regelkreis zur Steuerung von Stopf- oder Entstopfvorgängen eingesetzt werden.

Die Anpassungsschaltung dient zur Synchronisation eines Vergleichssignals mit dem Hilfssignal. Dazu enthält sie einen ersten Zwischenspeicher, dessen Takteingang zum Empfang des Hilfssignals vorgesehen ist, zum Zwischenspeichern von zugeführten Werten.

Wenn der Regelkreis Bestandteil einer Synchronisierschaltung zum Ausgleich von Frequenz- und/oder Phasenschwankungen zwischen einem ankommenden und einem abgehenden Signal ist, ist der als Schreibzähler ausgebildete erste Zähler zur Erzeugung von Schreibadressen für einzuschreibende Daten in einen Pufferspeicher und der als Lesezähler ausgebildete zweite Zähler zur Erzeugung von Leseadressen für auszulesende Daten aus dem Pufferspeicher vorgesehen. Der Subtrahierer dient zur Lieferung seines Ausgangssignals zu einem im Regelkreis enthaltenen, zur Steuerung des Lesezählers dienenden Regler. Die Schreib-.und Lesezähler liefern jeweils aus den Eingangssignalen abgeleitete oder codierte Vergleichssignale zu jeweils einer Anpassungsschaltung. Die Folge der Schreibadressen bildet das erste und die Folge der Leseadressen das zweite Vergleichssignal.

Der Subtrahierer, der ebenso wie die Schreib- und Lesezähler und die Anpassungsschaltungen Bestandteil des Vergleichers sind, bildet ein Ausgangssignal für einen Regler. Der Regler enthält ein das Ausgangssignal des Subtrahierers empfangendes Tiefpaßfilter, eine Stopfentscheidungsschaltung und einen Datengenerator. Das Tiefpaßfilter hat die Funktion, den durch das Hilfssignal veränderten Phasenfehler zu verringern. Die Stopfentscheidungsschaltung ist zur Auswertung der Ausgangssignale des Tiefpaßfilters und zur Lieferung von Stopfwerten an den Datengenerator, der die Stopfaktionen steuert, vorgesehen. Der Datengenerator bestimmt den Zeitpunkt einer Stopfaktion durch eine Rahmenzählung. Bei einer Stopfaktion wird der Lesezähler entsprechend vom Datengenerator gesteuert. Die Stopfinformation wird durch vom Datengenerator gebildete Pointerwerte an vorgegebenen Stellen im Rahmen in das abgehende Signal eingeblendet.

Auch beim ankommenden Signal müssen Pointerwerte zur Steuerung des Schreibzählers ausgewertet werden. Hierzu dient in der Synchronisierschaltung ein Datenanalysator, der zur Analyse der ankommenden Daten und zur Steuerung des Schreibzählers vorgesehen ist.

In einer Synchronisierschaltung für ein STM-1-Übertragungssystem läßt sich der Ausgleich von Frequenz- und Phasenschwankungen auch auf eine andere Art realisieren. Aus der DE-43 32 761 ist ein System bekannt, bei dem zuerst in einer Vorverarbeitungsanordnung eine Taktanpassung und in einer nachfolgenden Anordnung eine Pointerauswertung stattfindet. Hierbei ist in der Vorverarbeitungsanordnung der Regler als Stopfentscheidungsschaltung ausgebildet, die während jedes Rahmens des abgehenden Signals mindestens einmal zur Erzeugung eines Steuersignals vorgesehen ist, das bei Unterschreitung eines aus dem Ausgangswert des Subtrahierers abgeleiteten Wertes unter einen ersten Schwellwert eine negative Stopfaktion angibt und die bei Überschreitung des aus dem Ausgangswert des Subtrahierers abgeleiteten Wertes über einen zweiten Schwellwert, der größer als der erste Schwellwert ist, eine positive Stopfaktion angibt. Der Lesezähler ist während eines vorgegebenen Bereichs jedes Rahmens des abgehenden Signals bei Angabe einer positiven Stopfaktion durch das Steuersignal zur Erzeugung wenigstens einer doppelten Leseadresse (Anhalten des Lesezählers) und bei Angabe einer negativen Stopfaktion durch das Steuersignal zum Überspringen wenigstens einer Leseadresse bestimmt.

In dem oben genannten Vergleicher ist ein Subtrahierer enthalten, der die mit dem Hilfssignal synchronisierten Schreibadressen und die Leseadressen erhält. Die Synchronisation auf das Hilfssignal erfolgt mit einem ersten Zwischenspeicher (z.B. ein Register). Ist genau zu dem Einschreibzeitpunkt ein Wechsel der Schreib-oder Leseadresse erfolgt, so kann die Schreib- oder Leseadresse häufig nicht korrekt eingelesen werden. Hat sich beispielsweise zum Einschreibzeitpunkt in den jeweiligen ersten Zwischenspeicher ein erste Bitstelle der Schreib-oder Leseadresse schon verändert, eine zweite Bitstelle der Schreib- oder Leseadresse aber noch nicht, so ergibt sich eine falsche Schreib- oder Leseadresse. Damit dieser Fehler minimiert wird, enthält eine Anpassungsschaltung einen ersten Decoder, dessen Ausgang mit dem Eingang des ersten Zwischenspeichers gekoppelt ist und der zur Decodierung der empfangenen Eingangswerte in einen einschrittigen Code vorgesehen ist. Dieser einschrittige Code ist beispielsweise der Gray-Code. Zur Umsetzung der in einem Dualcode codierten Eingangswerte in einen Gray-Code dient der erste Decoder. Weiter ist noch in der Anpassungsschaltung ein zweiter Zwischenspeicher vorgesehen, dessen Ausgang mit dem Eingang des ersten Zwischenspeichers gekoppelt ist, zur Zwischenspeicherung der von dem ersten Decoder abgegebenen Ausgangswerte und zum Empfang eines mit den zugeführten Werten korrelierten Signals an seinem Takteingang. Ein zweiter Decoder ist zur Umsetzung der nach dem Gray-Code codierten Ausgangswerte des ersten Zwischenspeichers in nach dem Dualcode codierte Werte bestimmt .

Ausführungsbeispiele der Erfindung werden nachstehend anhand der Fig. näher erläutert. Es zeigen:
- Fig. 1: ein Übertragungssystem mit einem Multiplexer und einem Demultiplexer,
- Fig. 2: eine in dem Multiplexer nach Fig. 1 verwendbare, bekannte Synchronisierschaltung, einen in der Synchronisierschaltung verwend baren, bekannten Phasenregelkreis,
- Fig. 4: ein in dem Phasenregelkreis nach Fig. 3 einsetzbarer, nach der Erfindung arbeitender Vergleicher,
- Fig. 5: eine in dem Vergleicher nach Fig. 4 verwendbare Umsetzerschaltung,
- Fig. 6: ein Zeitdiagramm zur Erläuterung der Arbeitsweise der Umsetzerschaltung nach Fig. 5,
- Fig. 7: ein weiterer, in dem Phasenregelkreis nach Fig. 3 einsetzbarer, nach der Erfindung arbeitender Vergleicher,
- Fig. 8: eine in dem Vergleicher nach Fig. 7 verwendete Anpassungsschaltung,
- Fig. 9: eine erfindungsgemäße Synchronisierschaltung und
- Fig. 10: eine erfindungsgemäße Vorverarbeitungsschaltung für eine weitere Synchronisierschaltung.

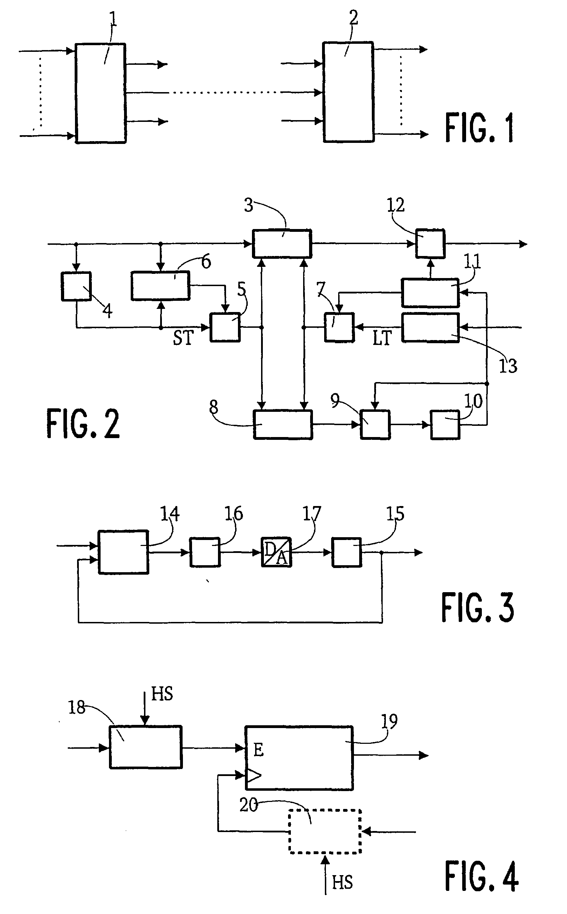

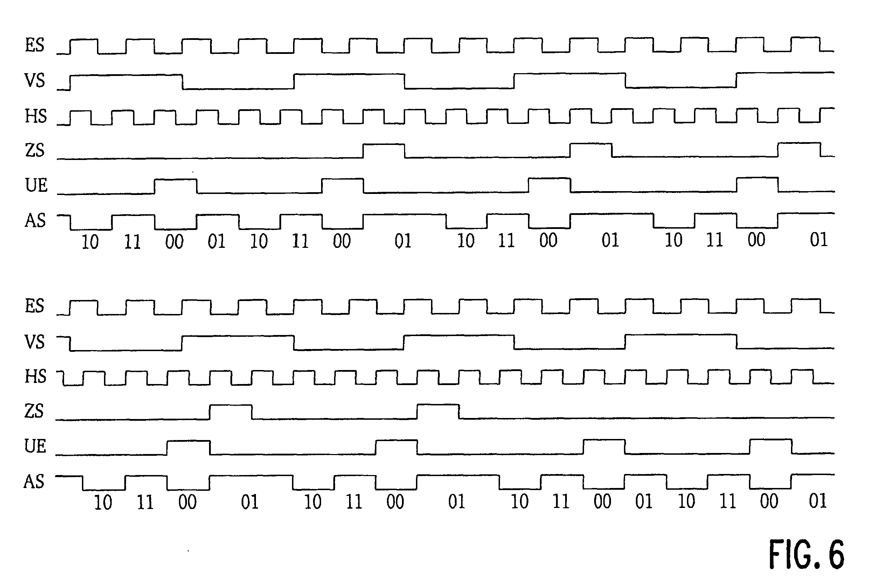

In Fig. 1 ist ein Übertragungssystem mit einem Multiplexer 1 und einem Demultiplexer 2 dargestellt. Zwischen dem Multiplexer 1 und dem Demultiplexer 2 können noch weitere, nicht dargestellte Schaltelemente vorhanden sein. Der Multiplexer 1 erhält beispielsweise plesiochrone Signale mit einer Bitrate von ca. 140 Mbit/s und bildet daraus STM-1-Signale der synchronen digitalen Hierarchie (vgl. CCITT-Empfehlung G.709). Aus den STM-1-Signalen wird in dem Multiplexer 1 beispielweise ein STM-16-Signal erzeugt. Der Demultiplexer 2 empfängt das STM-16-Signal und gewinnt daraus die plesiochronen Signale zurück. Der Multiplexer 1 kann auch verschiedene Transporteinheiten (z.B. TU-12) der synchronen digitalen Hierachie aus einem plesiochronen Signal (z.B. Bitrate von ungefähr 2 Mbit/s) erzeugen oder auch ein synchronisiertes Signal empfangen und ein synchronisiertes Signal abgeben. Beispielsweise wird ein STM-1-Signal dem Multiplexer 1 zugeführt, der wieder ein STM-1-Signal liefert.

Der Multiplexer 1 führt vor der Mültiplexbildung mittels einer Synchronisierschaltung eine Taktanpassung zwischen dem aus dem ankommenden Signal abgeleiteten Taktsignal (Schreibtaktsignal) und einem lokalen Taktsignal (Lesetaktsignal) durch. Hierdurch bedingt werden an bestimmten, durch den Rahmen des abgehenden Signals vorgegebenen Stellen in der Synchronisierschaltung 1 Stopfvorgänge durchgeführt. Bei einer negativen Stopfaktion wird dabei an einer für Stopfvorgänge vorgesehenen Stelle z.B. ein Datenbyte eingefügt. Bei einem positiven Stopfvorgang wird an einer dafür vorgesehenen Stopfstelle z.B. ein Byte (Stopfbyte) ohne Information eingefügt.

In einer Desynchronisierschaltung im Demultiplexer 2 werden die vorgenommenen Stopfaktionen wieder rückgängig gemacht. Die Desynchronisierschaltung verwendet dabei in der Regel eine Phasenregelschleife, mit der der durch die Stopfaktionen hervorgerufenen höherfrequente Phasenfehler herausgefiltert wird. Durch geeignete Maßnahmen in der Synchronisierschaltung kann der niederfrequente Phasenfehler zum größten Teil in den höherfrequenten Bereich verschoben werden. Eine weitere Reduzierung des niederfrequenten Phasenfehlers läßt sich mit den weiter unten dargestellten Maßnahmen erreichen.

In Fig. 2 ist eine z.B. aus der EP-0 507 385 A2 oder dem Aufsatz "Network synchronization- A Challenge for SDH-SONET?" von M.S. Klein und R. Urbansky, IEEE Communications Magazine, September 1993, Vol. 31, No. 9, Seiten 42 bis 50, bekannte Synchronisierschaltung des Multiplexers 1 schematisch dargestellt. Ein Pufferspeicher 3 erhält zur Zwischenspeicherung Daten des ankommenden Signals. Mittels einer Taktrückgewinnungsanordnung 4 wird aus dem ankommenden Signal ein Schreibtaktsignal ST erzeugt. Das Schreibtaktsignal ST wird zu einem Schreibzähler 5 geführt, der Schreibadressen erzeugt und diese dem Pufferspeicher 3 liefert. Wenn dem Pufferspeicher 3 beispielsweise ein STM-1-Signal zugeführt wird, müssen noch im Signal vorhandene Stopfinformationen (in Pointerwerten) berücksichtigt werden. Hierzu dient ein Datenanalysator 6. Dieser hält den Schreibzähler bei bestimmten Daten des ankommenden Signals an. Der Datenanalysator erhält noch das Schreibtaktsignal ST.

Den Auslesevorgang der Daten aus dem Pufferspeicher 3 steuert ein Lesezähler 7. Die Schreibadressen und die Leseadressen werden einem Differenzwerte bildenden Subtrahierer 8 zugeführt. Der Ausgang des Subtrahierers 8 ist über ein Tiefpaßfilter 9 mit einer Stopfentscheidungsschaltung 10 gekoppelt. Die Stopfentscheidungsschaltung 10 liefert Stopfwerte an einen Datengenerator 11, der eine Multiplexschaltung 12 zur Bildung des rahmensynchronisierten, abgehenden Signals und den Lesezähler 7 steuert. Die Ausgangswerte der Stopfentscheidungsschaltung 10 werden dem Tiefpaßfilter 9 noch zugeführt. Mittels des Datengenerators 11 werden Stopfinformationen und Steuerinformationen in das abgehende Signal eingefügt. Weiter hält der Datengenerator 11 den Lesezähler 7 beispielsweise bei einer negativen Stopfaktion an. Der Lesezähler 7, der Schreibzähler 5, der Subtrahierer 8, das Tiefpaßfilter 9, die Stopfentscheidungsschaltung 10 und der Datengenerator 11 bilden einen Regelkreis zur Regelung des Auslesevorgangs von Daten aus dem Pufferspeicher.

Der Lesezähler 7 erhält noch ein Lesetaktsignal LT von einem weiteren Regelkreis 13 (Phasenregelkreis), der Steuer- oder Synchronisationsinformationen beispielsweise von einem zur Steuerung und Überwachung des Übertragungssystems dienenden Managementsystem erhält. Ein Ausführungsbeispiel eines Phasenregelkreises 13 ist in der Fig. 3 dargestellt. Ein Vergleicher 14 erhält ein erstes Eingangssignal. Ein zweites Eingangssignal, das einem Oszillatorsignal oder dem Lesetaktsignal entspricht, wird von einem spannungsgesteuerten Oszillator 15 ebenfalls zu dem Vergleicher 14 geliefert. Das Ausgangssignal des Vergleichers 14 wird einem Regler 16 zugeführt, dessen Steuersignal über einen Digital-Analog-Umsetzer 17 der spannungsgesteuerte Oszillator 15 empfängt.

Erfindungsgemäß wird eine Reduzierung des Phasenfehlers in dem Übertragungssystem erreicht, wenn ein Vergleicher in einem Regelkreis des Übertragungssystems durch bestimmte im folgenden beschriebene Maßnahmen ergänzt wird*.* Der in Fig. 4 gezeigte Vergleicher enthält eine erste Umsetzerschaltung 18, die das erste E±ngangssignal und ein Hilfssignal HS empfängt. Die Frequenz des Hilfssignals HS weicht von der Frequenz des ersten Eingangssignals ab. In der Regel ist die Abweichung geringfügig. Durch das Hilfssignal HS wird aus dem ersten Eingangssignal ein "zustandsgeändertes" erstes Vergleichssignal gebildet, welches einem Freigabeeingang E eines Vergleichszählers 19 zugeführt wird. Auf den Takteingang des Vergleichszählers 19 wird das zweite Eingangssignal gegeben. Der Vergleichszähler 19 zählt nur während einer bestimmten Dauer des "zustandsgeänderten" ersten Vergleichssignals (z.B. wenn das "zustandsgeänderte" Vergleichssignal logisch "1" ist) die Takte des zweiten Eingangssignals. Der Inhalt des Vergleichszählers 19 wird an den Regler 16 geliefert.

Eine zweite Umsetzerschaltung 20 ist befähigt, mittels des Hilfssignals HS ein "zustandsgeändertes" zweites Vergleichssignal aus dem zweiten Eingangssignal erzeugen. Das "zustandsgeänderte" zweite Vergleichssignal wird dem Takteingang des Vergleichszählers 19 zugeführt. In diesem Fall ist es auch möglich die erste Umsetzerschaltung 18 wegzulassen und das erste Eingangssignal direkt zum Freigabeeingang E des Vergleichszählers 19 zu senden.

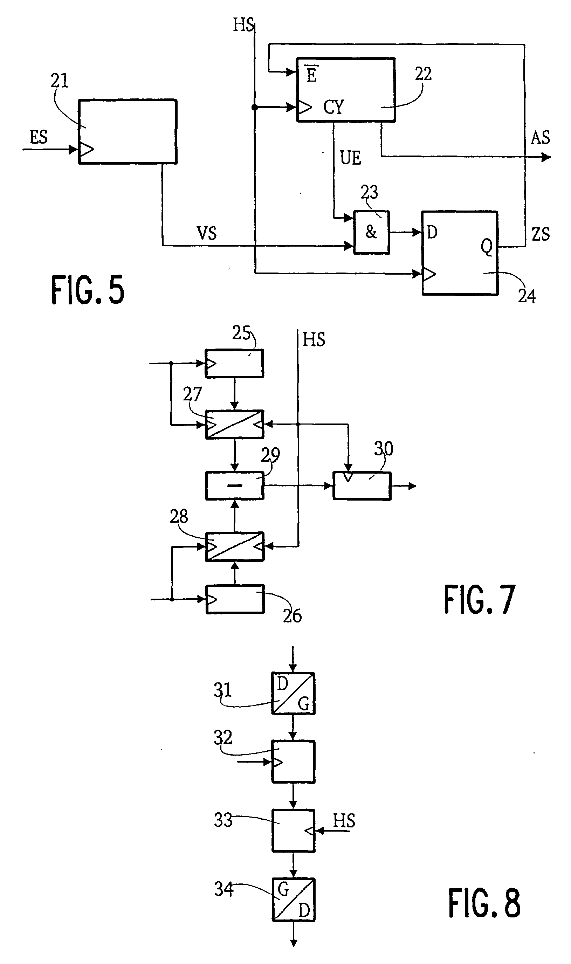

Ein Ausführungsbeispiel einer ersten oder zweiten Umsetzerschaltung 18 oder 20 ist detaillierter in der Fig. 5 gezeigt. Eine Umsetzerschaltung 18 oder 20 enthält einen ersten Zähler 21, einen zweiten Zähler 22, ein UND-Gatter 23 und ein erstes Kippglied 24. Die beiden Zähler 21 und 22 können 2-Bit-Zähler sein. Der Zähler 21 empfängt an seinem Takteingang das erste oder zweite Eingangssignal ES. Der höherwertige Ausgang des ersten Zählers 21 liefert ein Vergleichssignal VS an einen Eingang des UND-Gatters 23.
Die Frequenz des Vergleichssignals VS ist gegenüber der Frequenz des Eingangssignals ES um den Faktor 4 vermindert. Die Frequenzteilung, die der Zähler 21 durchführt, kann auch als Codierung bezeichnet werden. Das Vergleichssignal VS stellt ein codiertes Eingangssignal ES dar. Dem zweiten Eingang des UND-Gatters 23 wird ein Übertragsignal UE von einem Übertragausgang CY (Carry) des zweiten Zählers zugeführt. Der Ausgang des UND-Gatters 23 ist mit dem Kippeingang D des.ersten Kippgliedes 24'verbunden, dessen Takteingang ebenso wie der Takteingang des Zählers 22 das Hilfssignal HS empfängt. Der Ausgang Q des Kippgliedes 24 liefert ein Zwischensignal ZS an den invertierten Freigabeeingang E' des Zählers 22. Das "zustandgeänderte" Vergleichssignal AS der Umsetzerschaltung 18 oder 20 wird von dem niederwertigen Ausgang des Zählers 22 abgegeben.

In Fig. 6 ist ein Zeitdiagramm für die verschiedenen Signale ES, VS, HS, ZS, UE und AS aufgeführt, welche in der Umsetzerschaltung 18 oder 20 auftreten. Der Wert des von dem UND-Gatter 23.abgegebenen Signals wird von dem Kippglied 24 mit jeder positiven Flanke des Hilfssignals HS an seinen Ausgang Q weitergegeben. Wenn das Zwischensignal ZS logisch "1" ist, wird der Zähler 22 angehalten. Wenn der Zähler 22 einen Übertrag (vgl. Übertragsignal UE) erzeugt, erscheint mit dem Auftreten eines Impulses des Hilfssignals HS eine logische "1" an dem Ausgang Q des Kippgliedes 24. Wie sich aus der Fig. 6 entnehmen läßt, weist das "zustandsgeänderte" Vergleichssignal AS unterschiedlich lange Impulse auf, die durch das Hilfssignal HS hervorgerufen werden. Die Ziffern unterhalb des Signales AS geben den Zählerstand des Zählers 22 wieder. Das "zustandsgeänderte" Vergleichssignal AS weist im Mittel eine um den Faktor 2 geringere Frequenz als die Frequenz des Eingangssignals ES auf. Auch sind die jeweiligen Flanken von Eingangssignal ES und "zustandsgeändertem" Vergleichssignal AS versetzt. Aufgrund dieser im Vergleichssignal hervorgerufenen Unregelmäßigkeiten oder "Zustandsänderungen" wird der Phasenfehler im Übertragungssystem reduziert.

Es ist auch möglich, als "zustandsgeändertes" Vergleichssignal das vom anderen Ausgang des Zählers 22 abgegebene 1-Bit-Ausgangssignal zu verwenden. In diesem Fall weist das "zustandsgeänderte" Vergleichssignal eine geringere Frequenz auf.

Ein Ausführungsbeispiel eines weiteren Vergleichers für einen Regelkreis ist in der Fig. 7 dargestellt. Der Vergleicher enthält einen ersten und zweiten Zähler 25 und 26, eine erste und zweite Anpassungsschaltung 27 und 28, einen Subtrahierer 29 und ein Kippglied 30. Der erste Zähler 25 erhält an seinem Takteingang das erste Eingangssignal und gibt an seinem Zählausgang als Vergleichssignal eine Folge von Zählwerten ab. Die erste Anpassungsschaltung 27 führt eine Taktanpassung zwischen dem ersten Eingangssignal und dem Hilfssignal HS durch. Ein Ausführungsbeispiel der Anpassungsschaltung 27 oder 28 ist in der Fig. 8 gezeigt. Die Anpassungsschaltung 27 oder 28 enthält einen ersten Decoder zur Umsetzung von nach dem Dualcode codierten Werten in nach dem Graycode codierte Werte, zwei Zwischenspeicher 32 und 33 und einen zweiten Decoder 34 zur Umsetzung von nach dem Gray-Code codierten Werten in nach dem Dualcode codierte Werte. Nach einer Umsetzung der nach dem Dualcode codierten Werte des Vergleichssignals in nach dem Gray-Code codierte Werte im ersten Decoder 31 wird eine Zwischenspeicherung der vom ersten Decoder 31 abgegebenen Werte im Zwischenspeicher 32 durchgeführt. Der Zwischenspeicher 32 kann als Register ausgebildet sein, der an seinem Takteingang das Eingangssignal empfängt. Der Zwischenspeicher 33, der ebenfalls als Register ausgebildet ist und an seinem Takteingang das Hilfssignal HS empfängt, führt eine Zwischenspeicherung der vom Zwischenspeicher 32 abgegebenen Werte durch. Der Ausgang des Zwischenspeichers 33 ist mit dem zweiten Decoder 34 verbunden, der nach dem Dualcode codierte Werte nach der Umsetzung liefert.

Die Zwischenspeicher 32 und 33 dienen zur Synchronisierung der Werte mit dem Hilfssignal HS. Bei einem Wechsel des Zählerzustandes (z.B. Zähler 25) kann der Zählwert häufig nicht korrekt zwischengespeichert werden. Hat sich beispielsweise zum Einschreibzeitpunkt in den Zwischenspeicher 32 eine erste Bitstelle des Zählers schon verändert, eine zweite Bitstelle des Zählers aber noch nicht, so ergibt sich ein falsch eingeschriebener Zählwert. Damit dieser Fehler minimiert wird, wird die Dual-Gray-Code-Umsetzung durchgeführt. Der Gray-Code ist ein einschrittiger Code, bei dem sich bei aufeinanderfolgenden Werten nur eine Bitstelle ändert.

Die von der Anpassungsschaltung 27 gelieferten Werte werden einem Eingang des Subtrahierers 29 zugeführt. Der andere Eingang des Subtrahierers 29 erhält Werte von der zweiten Anpassungsschaltung 28, die jeweils Zählwerte von dem zweiten Zähler 26 und an den Takteingängen ebenso wie die erste Anpassungsschaltung 27 das zweite Eingangssignal und das Hilfssignal HS zugeführt bekommt. Die Ausgangswerte des Subtrahierers 29 werden in dem Kippglied 30 zwischengespeichert, das an seinem Takteingang das Hilfssignal HS empfängt. Die Anpassungsschaltungen 27 und 28 führen Zustandsänderungen in den von den Zählern 25 und 26 gelieferten Vergleichssignalen durch.

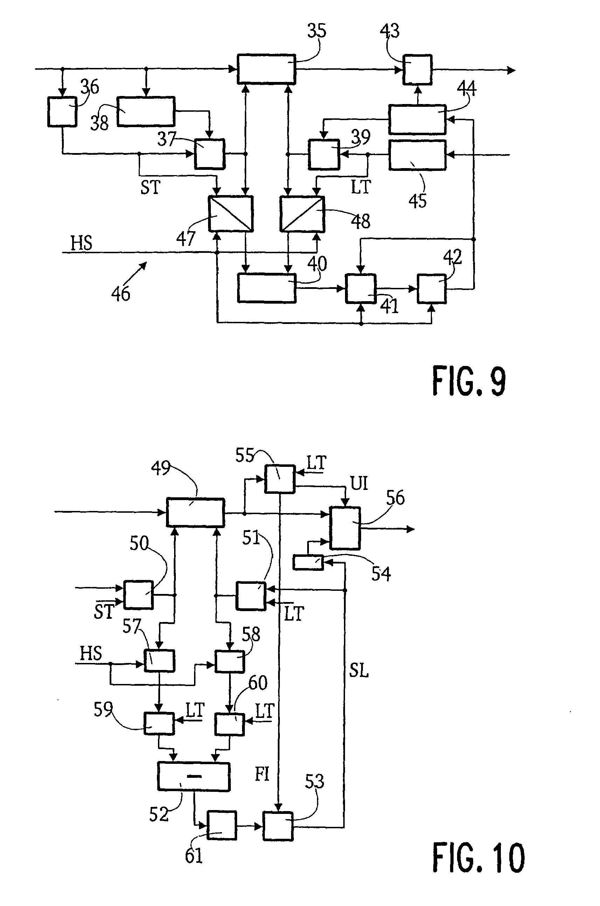

Der Vergleicher nach Fig. 7 kann in dem Phasenregelkreis der Fig. 3 oder in der im folgenden beschriebenen Synchronisierschaltung nach der Fig. 9 eingesetzt werden. Die Synchronisierschaltung nach der Fig. 9 enthält ebenso wie die bekannte Synchronisierschaltung nach der Fig. 3 einen Pufferspeicher 35 zur Zwischenspeicherung von ankommenden Daten eines Signals, eine Taktrückgewinnungsanordnung 36 zur Erzeugung eines Schreibtaktsignals ST, einen Schreibzähler 37 zur Erzeugung von Schreibadressen, einen Datenanalysator 38 zur Auswertung von Pointerwerten, einen Lesezähler 39 zur Erzeugung von Leseadressen, einen Differenzwerte bildenden Subtrahierer 40, ein Tiefpaßfilter 41, eine Stopfwerte liefernde Stopfentscheidungsschaltung 42, eine Multiplexschaltung 43 zur Bildung des abgehenden Signals, einen Datengenerator 44 zur Steuerung des Lesezählers 39 und der Multiplexschaltung 43 und einen Phasenregelkreis 45 zur Erzeugung des Lesetaktsignals LT. Der Phasenregelkreis 45 erhält Steuer- oder Synchronisationsinformationen beispielsweise von einem zur Steuerung und Überwachung des Übertragungssystems dienenden Managementsystem.

Der in der Synchronisierschaltung verwendete neue Vergleicher 46 nach der Fig. 9 enthält außer dem Schreibzähler 37 (erster Zähler), dem Lesezähler 39 (zweiter Zähler) und dem Subtrahierer 40 zwei Anpassungsschaltungen 47 und 48. Die Anpassungsschaltung 47 empfängt die Schreibadressen von dem Schreibzähler 37, das Schreibtaktsignal ST und ein Hilfssignal HS. Die mit dem Hilfssignal HS synchronisierte Schreibadresse wird einem Eingang des Subtrahierers 40 geliefert. Die Anpassungsschaltung 48 empfängt außer dem Lesetaktsignal LT und dem Hilfssignal HS auch die Leseadressen von dem Lesezähler 39. Der Subtrahierer 40bekommt mit dem Hilfssignal HS synchronisierte Leseadressen geliefert. Beide Anpassungsschaltungen 47 und 48 entsprechen der Anpassungsschaltung nach der Fig. B.

Dem Tiefpaßfilter 41 und der Stopfentscheidungsschaltung 42 werden noch das Hilfssignal HS zur Taktung zugeführt. Gegebenenfalls können auch weitere Schaltelemente das Hilfssignal HS zur Taktung erhalten.

Der Lesezähler 39, der Schreibzähler 37, die Anpassungsschaltungen 47 und 48, der Subtrahierer 40, das Tiefpaßfilter 41, die Stopfentscheidungsschaltung 42 und der Datengenerator 44 bilden einen Regelkreis zur Regelung des Auslesevorgangs von Daten aus dem Pufferspeicher 35. Weiter bilden das Tiefpaßfilter 41, die Stopfentscheidungsschaltung 42 und der Datengenerator 44 einen Regler.

Aufgrund der "Zustandsänderungen" in der Folge der Schreib- und Leseadressen wird eine Reduzierung des Phasenfehlers im Übertragungssystem erreicht.

Die in der Fig. 9 dargestellte Synchronisierschaltung läßt sich auch in eine Vorverarbeitungsanordnung zur Taktanpassung und eine Nachbearbeitungsanordnüng zur Pointerauswertung trennen. Eine solche Vorverarbeitungsanordnung ist aus der DE-43 32 761 bekannt und ist zusammen mit weiteren Schaltelementen in der Fig. 10 gezeigt.

Die in Fig. 10 dargestellte Vorverarbeitungsanordnung enthält einen beispielsweise ein STM-1-Signal empfangenden Pufferspeicher 49, einen Schreibzähler 50 (erster Zähler), einen Lesezähler 51 (zweiter Zähler), einen Subtrahierer 52, eine Stopfentscheidungsschaltung 53, einen Codierer 54, eine Rahmenauswerteschaltung 55, einen Multiplexer 56, zwei Anpassungsschaltungen 57 und 58, zwei Register 59 und 60 und ein Tiefpaßfilter 61. Der Schreibzähler 50, der beispielsweise als modulo-4-Zähler ausgebildet ist, erhält das Schreibtaktsignal ST und erzeugt mit jedem Takt eine Schreibadresse. Die nach dem einschrittigen Gray-Code erzeugten Schreibadressen wiederholen sich zyklisch. Die. Schreibadressen werden dem Pufferspeicher 49 und der Anpassungsschaltung 57 zugeführt, welche an seinem Takteingang das Hilfssignal HS empfängt. Zwischen dem Ausgang der Anpassungsschaltung 57 und einem Eingang des Subtrahierers 52 liegt das Register 59, welches das Lesetaktsignal LT erhält.

Zur Durchführung des Auslesevorgangs liefert der Lesezähler 51, der auch als modulo-4-Zähler ausgebildet sein kann und das Lesetaktsignal LT erhält, dem Pufferspeicher 49 noch Leseadressen. Der Lesezähler 51 bekommt noch von der Stopfentscheidungsschaltung 53 ein Steuersignal SL zugeführt. Wenn das Steuersignal SL eine positive Stopfaktion angibt, wird die zuletzt erzeugte Leseadresse nochmals ausgegeben (Lesezähler 51 wird angehalten). Bei Angabe einer negativen Stopfaktion im Steuersignal SL wird die eigentlich folgende Leseadresse übersprungen.

Die Folge der Leseadressen wird außer dem Pufferspeicher 49 auch der Anpassungsschaltung 58 zugeführt, die das Hilfssignal HS an ihrem Takteingang erhält und ebenso wie die Anpassungsschaltung 57 aus einem Zwischenspeicher (Register) besteht. Zwischen Anpassungsschaltung 58 und Subtrahierer 52 ist ein weiteres, das Lesetaktsignal LT empfangenes Register 60 eingefügt.

Die Anpassungsschaltungen 57 und 58 dienen zur Anpassung der Schreib- und Leseadressen an den Hilfstakt. Die Register 59 und 60 passen wiederum die von den Anpassungsschaltungen 57 und 58 abgegebenen Adressen an das Lesetaktsignal LT an.

Die Stopfentscheidungsschaltung 53 bildet das Steuersignal SL und erhält außer dem Lesetaktsignal LT zu einem bestimmten Zeitpunkt einen Freigabeimpuls Fl. Wenn der Freigabeimpuls FI vorliegt, wird die Stopfentscheidung getroffen. Die Stopfentscheidungsschaltung 53 vergleicht den vom Subtrahierer 52 über das Tiefpaßfilter 61 gelieferten Wert mit einem ersten und zweiten Schwellwert. Der erste Schwellwert entspricht einem unteren Füllstand des Pufferspeichers 49 und der zweite Schwellwert einem oberen Füllstand des Pufferspeichers 49. Unterschreitet der vom Subtrahierer 52 gelieferte Wert den ersten Schwellwert, muß negativ gestopft werden und das von der Stopfentscheidungsschaltung erzeugte Steuersignal SL enthält eine Angabe über eine negative Stopfaktion. Überschreitet der vom Subtrahierer 52 gelieferte Wert den zweiten Schwellwert, wird das Steuersignal SL von der Stopfentscheidungsschaltung 53 mit einer positiven Stopfaktion ausgegeben.

Negativ muß gestopft werden, wenn die Frequenz des Lesetaktsignals LT kleiner als die Frequenz des Schreibtaktsignals ST ist. Wenn die Frequenz des Lesetaktsignals LT größer als die Frequenz des Schreibtaktsignals ST ist, muß positiv gestopft werden. Bei einem negativen Stopfvorgang wird der Rahmen des abgehenden STM-1-Signals an einer vorbestimmten Stelle um ein Byte gekürzt und bei einem positiven Stopfvorgang an einer bestimmten Stelle im Rahmen des abgehenden Signals verlängert. Dies wird mittels des Lesezählers 51 erreicht, der bei einer Veränderung des Steuersignals SL entweder eine Leseadresse doppelt ausgibt oder eine Leseadresse überspringt.

Die Stopfentscheidungsschaltung 53 bildet zusammen mit dem Tiefpaßfilter 61 den Regler des aus Schreibzähler 50, Lesezähler 51, Anpassungsschaltungen 57 und 58, Register 59 und 60 und Subtrahierer 52 bestehenden Regelkreises. Der Regelkreis steuert den Lesezähler-51.

Den Freigabeimpuls FI für die Stopfentscheidungsschaltung 53 erzeugt die Rahmenauswerteschaltung 55, die das Lesetaktsignal LT und den vom Pufferspeicher 49 abgegebenen Datenstrom erhält. Eine solche Rahmenauswerteschaltung 55 erkennt den Rahmenbeginn eines STM-1-Signals und zählt die Bytes des STM-1-Rahmens. Erreicht ein in der Rahmenauswerteschaltung 55 enthaltener Zähler einen Zählerstand, der dem Anfang des vorgegebenen Bereichs (erstes Byte der 5. Zeile des STM-1-Rahmens oder erstes B2-Byte) entspricht, erzeugt die Rahmenauswerteschaltung 55 den Freigabeimpuls. Während des Auftretens des zweiten B2-Bytes (zweites Byte in der 5. Zeile des STM-1-Rahmens) wird von der Rahmenauswerteschaltung 55 ein Umschaltsignal UI für den Multiplexer 56 erzeugt.

Der erste Eingang des Multiplexers 56 ist mit dem Ausgang des Pufferspeichers 49 verbunden und dessen zweiter Eingang mit dem Codierer 54, der das Steuersignal SL empfängt. Nur während des Vorliegens des Umschaltsignals UI ist der zweite Eingang des Multiplexers 56 mit seinem Ausgang verbunden. Sonst ist der erste Eingang des Multiplexers 12 mit seinem Ausgang gekoppelt. Der Codierer 54 liefert ein Codewort, das angibt, ob eine positive, eine negative oder keine Stopfaktion vorliegt. Dieses Codewort wird als zweites B2-Byte in das abgehende STM-1-Signal mittels des Multiplexers 56 und der Rahmenauswerteschaltung 55 eingeblendet.

## Patentansprüche

1. Übertragungssystem mit einem Regelkreis, umfassend:
einen Vergleicher zum Vergleich eines ersten Eingangssignals und eines zweiten Eingangssignals und Abgabe eines Ausgangssignals, das dem Regelkreis zugeführt wird,
**gekennzeichnet durch** folgende Merkmale:
Mittel zur Bildung eines Hilfssignals (HS), das als Taktsignal von der Frequenz des ersten Eingangssignals abweicht;
Mittel (18; 25, 27) zur Bildung eines ersten Vergleichssignals, das aus dem ersten Eingangssignal abgeleitet wird; und zwar
a) **durch** Codierung des ersten Eingangssignals, wobei eine aus zwei Decodern (31, 34) und zwei Zwischenspeichern (32, 33) aufgebaute Schaltungskette vorgesehen ist, der das Hilfssignal (HS) zugeführt wird, oder
b) bei dem Impulse oder Impulspausen verlängert oder verkürzt sind, wobei eine aus zwei Zählern (21, 22), einem UND-Glied (23) und einem Kippglied (24) aufgebaute Schaltung vorgesehen ist, der das Hilfssignal (HS) zugeführt wird, oder
c) bei dem Impulse in dem ersten Eingangssignal zu bestimmten, von dem Hilfssignal (HS) vorgegebenen Zeitpunkten ausgeblendet oder vervielfacht werden;
Mittel (20; 26, 28) zur Bildung eines zweiten Vergleichssignals, das dem zweiten Eingangssignal entspricht oder aus dem zweiten Eingangssignal abgeleitet wird, und
Mittel (19; 29) zum Kombinieren des ersten und des zweiten Vergleichssignals zur Bildung des Ausgangssignals.

2. Übertragungssystem nach Anspruch 1, **dadurch gekennzeichnet, dass** das zweite Vergleichssignal gewonnen wird durch Codierung des zweiten Eingangssignals, wobei eine aus zwei Decodern (31, 34) und zwei Zwischenspeichern (32, 33) aufgebaute Schaltungskette vorgesehen ist, oder bei dem Impulse oder Impulspausen verlängert oder verkürzt sind, wobei eine aus zwei Zählern (21, 22), einem UND-Glied (23) und einem Kippglied (24) aufgebaute Schaltung vorgesehen ist, der das Hilfssignal (HS) zuführbar ist, oder
Impulse in dem zweiten Eingangssignal zu bestimmten, von dem Hilfssignal (HS) vorgegebenen Zeitpunkten ausgeblendet oder vervielfacht werden.

3. Übertragungssystem nach Anspruch 2,
wobei der Vergleicher umfasst:
einen ersten Eingangszähler (25),
eine mit diesem verbundene erste Anpassungsschaltung (27) zur Durchführung einer Taktanpassung zwischen dem ersten Eingangssignal und dem Hilfssignal (HS),
einem zweiten Eingangszähler (26),
eine mit diesem verbundene zweite Anpassungsschaltung (28) zur Durchführung einer Taktanpassung zwischen dem zweiten Eingangssignal und dem Hilfssignal (HS), und
einen Subtrahierer (29), der mit dem Ausgang der jeweiligen Anpassungsschaltung (27, 28) verbunden ist und das Ausgangssignal abgibt.

4. Übertragungssystem nach Anspruch 3 ,
**dadurch gekennzeichnet,**
**dass** die jeweilige Anpassungsschaltung (27; 28) einen ersten Zwischenspeicher (33), dessen Takteingang zum Empfang des Hilfssignals (HS) vorgesehen ist, zum Zwischenspeichern von zugeführten Werten enthält.

5. Übertragungssystem nach Anspruch 3 oder 4 ,
**dadurch gekennzeichnet,**
**dass** der Regelkreis Bestandteil einer Synchronisierschaltung zum Ausgleich von Frequenz- und/oder Phasenschwankungen zwischen einem ankommenden und einem abgehenden Signal ist,
**dass** der erste Eingangszähler (25) als Schreibzähler (37) ausgebildet ist und zur Erzeugung von Schreibadressen für einzuschreibende Daten in einem Pufferspeicher (35) dient und dass der zweite Eingangszähler (26) als Lesezähler (39) ausgebildet ist und zur Erzeugung von Leseadressen für auszulesende Daten aus dem Pufferspeicher (35) vorgesehen ist und dass der Subtrahierer (29, 40) zur Lieferung seines Ausgangssignals zu einem im Regelkreis enthaltenen, zur Steuerung des Lesezählers (39) dienenden Regler (41, 42, 44) vorgesehen ist.

6. Übertragungssystem nach Anspruch 5 ,
**dadurch gekennzeichnet,**
**dass** der Regler ein das Ausgangssignal des Subtrahierers (40) empfangendes Tiefpassfilter (41), eine Stopfentscheidungsschaltung (42) und einen Datengenerator (44) enthält,
**dass** die Stopfentscheidungsschaltung (42) zur Auswertung der Ausgangssignale des Tiefpassfilters (41) und zur Lieferung von Stopfwerten an den Datengenerator (44) vorgesehen ist und
**dass** der Datengenerator (44) zur Steuerung von Stopfaktionen vorgesehen ist.

7. Übertragungssystem nach Anspruch 5 oder 6 ,
**dadurch gekennzeichnet,**
**dass** die Synchronisierschaltung einen Datenanalysator (38) zur Analyse der ankommenden Daten und zur Steuerung des Schreibzählers (37) enthält.

8. Übertragungssystem nach Anspruch 5 ,
**dadurch gekennzeichnet,**
**dass** der Regler als Stopfentscheidungsschaltung (53) ausgebildet ist, die während jedes Rahmens des abgehenden Signals mindestens einmal zur Erzeugung eines Steuersignals vorgesehen ist, das bei Unterschreitung eines aus dem Ausgangswert des Subtrahierers (29, 52) abgeleiteten Wertes unter einen ersten Schwellwert eine negative Stopfaktion angibt und die bei Überschreitung des aus dem Ausgangswert des Subtrahierers (29, 52) abgeleiteten Wertes über einen zweiten Schwellwert, der größer als der erste Schwellwert ist, eine positive Stopfaktion angibt und dass der Lesezähler (39, 51) während eines vorgegebenen Bereichs jedes Rahmens des abgehenden Signals bei Angabe einer positiven Stopfaktion durch das Steuersignal zur Erzeugung wenigstens einer doppelten Leseadresse und bei Angabe einer negativen Stopfaktion durch das Steuersignal zum Überspringen wenigstens einer Leseadresse vorgesehen ist.

9. Übertragungssystem nach einem der Ansprüche 4 bis 7,
**dadurch gekennzeichnet,**
**dass** die jeweilige Anpassungsschaltung (27; 28) einen ersten Decoder (31) enthält, dessen Ausgang mit dem Eingang des ersten Zwischenspeichers (33) gekoppelt ist und der zur Decodierung der empfangenen Eingangswerte in einen einschrittigen Code vorgesehen ist.

10. Übertragungssystem nach Anspruch 9 ,
**dadurch gekennzeichnet,**
**dass** der erste Decoder (31) zur Umsetzung der in einem Dualcode codierten Eingangswerte in einen Gray-Code vorgesehen ist und
**dass** die jeweilige Anpassungsschaltung einen zweiten Zwischenspeicher (32), dessen Ausgang mit dem Eingang des ersten Zwischenspeichers (33) gekoppelt ist, zur Zwischenspeicherung der von dem ersten Decoder (31) abgegebenen Ausgangswerte und zum Empfang eines mit den zugeführten Werten korrelierten Signals an seinem Takteingang und einem zweiten Decoder (34) zur Umsetzung der nach dem Gray-Code codierten Ausgangswerte des ersten Zwischenspeichers (33) in nach dem Dualcode codierte Werte enthält.

11. Übertragungssystem nach Anspruch 1,
**dadurch gekennzeichnet, dass** der Vergleicher (18, 19) eine erste Umsetzerschaltung (18) und einen Vergleichszähler (19) umfasst, wobei der ersten Umsetzerschaltung (18) das erste Eingangssignal und das Hilfssignal (HS) zugeführt werden, um das erste Vergleichssignal zu bilden, und
wobei das erste Vergleichssignal dem Freigabeeingang des Vergleichszählers (19) und das zweite Vergleichssignal dem Takteingang des Vergleichszählers (19) zuführbar sind.

12. Übertragungssystem nach Anspruch 11,
**dadurch gekennzeichnet,**
**dass** der Vergleicher (18, 19) einen ersten und zweiten Zähler (21, 22), ein erstes Kippglied (24) und ein UND-Gatter (23) enthält,
**dass** der erste Zähler (21) zum Empfang eines der Eingangssignale und zur Lieferung eines einzelnen Vergleichssignals von einem 1-Bit-Ausgang des Zählers (21) vorgesehen ist,
**dass** das erste Kippglied (24) zum Empfang des Hilfssignals (HS) an seinem Takteingang und zum Empfang des vom UND-Gatter (23) abgegebenen Signals an einem Kippeingang vorgesehen ist, welches eine Kombination des Vergleichssignals und eines Übertragsignals vom zweiten Zähler (22) darstellt, und
**dass** der zweite Zähler (22) zum Empfang des Hilfssignals (HS) an seinem Takteingang, zum Empfang des invertierten Ausgangssignals des ersten Kippgliedes (24) an seinem Freigabeeingang, zur Lieferung des Übertragsignals von seinem Übertragausgang und zur Lieferung eines einzelnen Vergleichssignals von einem 1-Bit-Ausgang des zweiten Zählers (22) vorgesehen ist.

13. Übertragungssystem nach Anspruch 1,
wobei der Vergleicher (18 bis 20) umfasst:
- eine erste Umsetzerschaltung (18), der das erste Eingangssignal und das Hilfssignal (HS) zugeführt werden und die das erste Vergleichssignal bildet,
- eine zweite Umsetzerschaltung (20), der das zweite Eingangssignal und das Hilfssignal (HS) zugeführt werden und die das zweite Vergleichssignal bildet,
- einen Vergleichszähler (19), der zum Empfang des von der ersten Umsetzerschaltung (18) erzeugten ersten Vergleichssignals an seinem Freigabeeingang und des zweiten Eingangssignals als zweites Vergleichssignal an seinem Takteingang, oder der zum Empfang des ersten Eingangssignals als erstes Vergleichssignal an seinem Freigabeeingang und des von der zweiten Umsetzerschaltung (20) erzeugten zweiten Vergleichssignals an seinem Takteingang, oder der zum Empfang des von der ersten Umsetzerschaltung (18) erzeugten ersten Vergleichssignals an seinem Freigabeeingang und des von der zweiten Umsetzerschaltung (20) erzeugten zweiten Vergleichssignals an seinem Takteingang vorgesehen ist.

14. Übertragungssystem nach Anspruch 13,
**dadurch gekennzeichnet, dass** eine der Umsetzerschaltungen (18, 20) zur Bildung eines einzelnen Vergleichssignals aus einem der Eingangssignale vorgesehen ist, welches im Mittel die gleiche Frequenz oder ein Vielfaches der Frequenz des Vergleichssignals aufweist und dessen Flanken zum größten Teil gegenüber den Flanken des Vergleichssignals oder des Ausgangssignals versetzt sind.

## Claims

1. Transmission system with a control loop, comprising:
a comparator for comparing a first input signal and a second input signal and delivering an output signal which is supplied to the control loop, **characterized by** the following features:
means for forming an auxiliary signal (HS) which, as clock signal, deviates from the frequency of the first input signal;
means (18; 25, 27) for forming a first comparison signal which is derived from the first input signal;
a) by coding the first input signal wherein a circuit chain built up of two decoders (31, 34) and two temporary stores (32, 33) is provided which is supplied with the auxiliary signal (HS), or
b) in which pulses or pulse intervals are extended or shortened, wherein a circuit built up of two counters (21, 22), an AND gate (23) and a flip flop (24) is provided which is supplied with the auxiliary signal (HS), or
c) in which pulses in the first input signal are gated out or multiplied at certain times predetermined by the auxiliary signal (HS);
means (20; 26, 28) for forming a second comparison signal which corresponds to the second input signal or is derived from the second input signal, and
means (19; 29) for combining the first and the second comparison signal for forming the output signal.

2. Transmission system according to Claim 1, **characterized in that** the second comparison signal is obtained by coding the second input signal, wherein a circuit chain built up of two decoders (31, 34) and two temporary stores (32, 33) is provided, or in which pulses or pulse intervals are extended or shortened, wherein a circuit built up of two counters (21, 22), an AND gate, (23) and a flip flop (24) is provided which can be supplied with the auxiliary signal (HS), or
pulses in the second input signal are gated out or multiplied at certain times predetermined by the auxiliary signal (HS).

3. Transmission system according to Claim 2, wherein the comparator comprises the following:
a first input counter (25),
a first matching circuit (27), connected to the former, for performing clock matching between the first input signal and the auxiliary signal (HS),
a second input counter (26),
a second matching circuit (28), connected to the former, for performing clock matching between the second input signal and the auxiliary signal (HS), and
a subtractor (29) which is connected to the output of the respective matching circuit (27, 28) and delivers the output signal.

4. Transmission system according to Claim 3, **characterized in that** the respective matching circuit (27; 28) contains a first temporary store (33), the clock input of which is provided for receiving the auxiliary signal (HS), for temporarily storing supplied values.

5. Transmission system according to Claims 3 or 4, **characterized in that** the control loop is a component of a synchronizing circuit for compensating for frequency and/or phase fluctuations between an incoming signal and an outgoing signal,
that the first input counter (25) is constructed as write counter (37) and is used for generating write addresses for data to be entered in a buffer store (35) and that the second input counter (26) is constructed as read counter (39) and is intended for generating read addresses for data to be read out from the buffer store (35) and that the subtractor (29, 40) is provided for delivering its output signal to a controller (41, 42, 44) contained in the control loop and used for controlling the read counter (39).

6. Transmission system according to Claim 5, **characterized in that** the controller contains a low-pass filter (41) receiving the output signal of the subtractor (40), a stuffing decision circuit (42) and a data generator (44),
that the stuffing decision circuit (42) is provided for evaluating the output signals of the low-pass filter (41) and for delivering stuffing values to the data generator (44), and
that the data generator (44) is intended for controlling stuffing actions.

7. Transmission system according to Claim 5 or 6, **characterized in that** the synchronization circuit contains a data analyzer (38) for analyzing the incoming data and for controlling the write counter (37).

8. Transmission system according to Claim 5, **characterized in that** the controller is constructed as stuffing decision circuit (53) which is provided at least once during each frame of the outgoing signal for generating a control signal which specifies a negative stuffing action when a value derived from the output value of the subtractor (29, 52) drops below a first threshold value and which specifies a positive stuffing action when the value derived from the output value of the subtractor (29, 52) exceeds a second threshold value which is greater than the first threshold value, and that the read counter (39, 51) is provided for generating at least a double read address during a predetermined area of each frame of the outgoing signal when a positive stuffing action is specified by the control signal and for skipping at least one read address when a negative stuffing action is specified by the control signal.

9. Transmission system according to one of Claims 4 to 7, **characterized in that** the respective matching circuit (27; 28) contains a first decoder (31), the output of which is coupled to the input of the first temporary store (33) and which is provided for decoding the received input values in a one-step code.

10. Transmission system according to Claim 9, **characterized in that** the first decoder (31) is provided for converting the input values, coded in a binary code, into a Gray code and
that the respective matching circuit contains a second temporary store (32), the output of which is coupled to the input of the first temporary store (33), for temporarily storing the output values delivered by the first decoder (31) and for receiving a signal, correlated with the supplied values, at its clock input, and a second decoder (34) for converting the output values, coded in accordance with the Gray code, of the first temporary store (33) into values coded in accordance with the binary code.

11. Transmission system according to Claim 1, **characterized in that** the comparator (18, 19) comprises a first converter circuit (18) and a comparison counter (19), the first converter circuit (18) being supplied with the first input signal and the auxiliary signal (HS) in order to form the first comparison signal, and wherein the first comparison signal can be supplied to the enable input of the comparison counter (19) and the second comparison signal can be supplied to the clock input of the comparison counter (19).

12. Transmission system according to Claim 11, **characterized in that** the comparator (18, 19) contains a first and second counter (21, 22), a first flip flop (24) and an AND gate (23),
that the first counter (21) is provided for receiving an input signal and for delivering a single comparison signal from a 1-bit output of the counter (21),
that the first flip flop (24) is provided for receiving the auxiliary signal (HS) at its clock input and for receiving the signal delivered by the AND gate (23) at a trigger input, which represents a combination of the comparison signal and of a carry signal from the second counter (22), and
that the second counter (22) is provided for receiving the auxiliary signal (HS) at its clock input, for receiving the inverted output signal of the first flip flop (24) at its enable input, for delivering the carry signal from its carry output and for delivering a single comparison signal from a 1-bit output of the second counter (22).

13. Transmission system according to Claim 1, wherein the comparator (18 to 20) comprises the following:
- a first converter circuit (18) which is supplied with the first input signal and the auxiliary signal (HS) and which forms the first comparison signal,
- a second converter circuit (20) which is supplied with second input signal and the auxiliary signal (HS) and which forms the second comparison signal,
- a comparison counter (19) which is provided for receiving the first comparison signal, generated by the first converter circuit (18), at its enable input and the second input signal as second comparison signal at its clock input, or which is provided for receiving the first input signal as first comparison signal at its enable input and the second comparison signal, generated by the second converter circuit (20), at its clock input, or which is provided for receiving the first comparison signal, generated by the first converter circuit (18), at its enable input and the second comparison signal, generated by the second converter circuit (20), at its clock input.

14. Transmission system according to Claim 13, **characterized in that** one of the converter circuits (18, 20) is provided for forming a single comparison signal from one of the input signals which, in the mean, has the same frequency or a multiple of the frequency of the comparison signal and the edges of which are largely offset with respect to the edges of the comparison signal or of the output signal.

## Revendications

1. Système de transmission avec une boucle de régulation comprenant :
un comparateur pour comparer un premier signal d'entrée et un deuxième signal d'entrée et délivrer un signal de sortie qui est acheminé à la boucle de régulation,
**caractérisé par** les caractéristiques suivantes :
des moyens pour former un signal auxiliaire (HS) qui, en tant que signal d'horloge, est différent de la fréquence du premier signal d'entrée ;
des moyens (18 ; 25, 27) pour former un premier signal de comparaison qui est dérivé du premier signal d'entrée, à savoir
a) par codage du premier signal d'entrée, une chaîne de circuits constituée de deux décodeurs (31, 34) et de deux mémoires intermédiaires (32, 33) à laquelle est acheminé le signal auxiliaire (HS) étant prévue ou
b) avec lequel les impulsions ou les pauses d'impulsion sont rallongées ou raccourcies, un circuit constitué de deux compteurs (21, 22), d'une porte ET (23) et d'une bascule (24) auquel est acheminé le signal auxiliaire (HS) étant prévu ou
c) avec lequel les impulsions dans le premier signal d'entrée sont supprimées ou multipliées à des moments donnés prédéfinis par le signal auxiliaire (HS) ;
des moyens (20 ; 26, 28) pour former un deuxième signal de comparaison qui correspond au deuxième signal d'entrée ou qui est dérivé du deuxième signal d'entrée et
des moyens (19 ; 29) pour combiner le premier et le deuxième signal de comparaison pour former le signal de sortie.

2. Système de transmission selon la revendication 1, **caractérisé en ce que** le deuxième signal de comparaison est obtenu en codant le deuxième signal d'entrée, une chaîne de circuits constituée de deux décodeurs (31, 34) et de deux mémoires intermédiaires (32, 33) étant prévue ou avec lequel les impulsions ou les pauses d'impulsion sont rallongées ou raccourcies, un circuit constitué de deux compteurs (21, 22), d'une porte ET (23) et d'une bascule (24) auquel est acheminé le signal auxiliaire (HS) étant prévu ou alors les impulsions dans le deuxième signal d'entrée sont supprimées ou multipliées à des moments donnés prédéfinis par le signal auxiliaire (HS).

3. Système de transmission selon la revendication 2, le comparateur comprenant :
un premier compteur d'entrée (25),
un premier circuit d'adaptation (27) relié avec celui-ci pour effectuer une adaptation de l'horloge entre le premier signal d'entrée et le signal auxiliaire (HS),
un deuxième compteur d'entrée (26),
un deuxième circuit d'adaptation (28) relié avec celui-ci pour effectuer une adaptation de l'horloge entre le deuxième signal d'entrée et le signal auxiliaire (HS) et
un soustracteur (29) qui est relié avec la sortie du circuit d'adaptation (27, 28) correspondant et délivre le signal de sortie.

4. Système de transmission selon la revendication 3, **caractérisé en ce que** le circuit d'adaptation (27 ; 28) correspondant contient une première mémoire intermédiaire (33), dont l'entrée d'horloge est prévue pour la réception du signal auxiliaire (HS), pour le stockage temporaire des valeurs acheminées.

5. Système de transmission selon la revendication 3 ou 4, **caractérisé en ce que**
la boucle de régulation fait partie d'un circuit de synchronisation destiné à compenser les fluctuations de fréquence et/ou de phase entre un signal arrivant et un signal partant,
le premier compteur d'entrée (25) est réalisé sous la forme d'un compteur d'écriture (37) et sert à générer des adresses d'écriture pour des données à écrire dans une mémoire tampon (35) et que le deuxième compteur d'entrée (26) est réalisé sous la forme d'un compteur de lecture (39) et sert à générer des adresses de lecture pour des données à lire depuis la mémoire tampon (35) et que le soustracteur (29, 40) est prévu pour délivrer son signal de sortie à un régulateur (41, 42, 44) contenu dans la boucle de régulation et servant à commander le compteur de lecture (39).

6. Système de transmission selon la revendication 5, **caractérisé en ce que**
le régulateur contient un filtre passe-bas (41) recevant le signal de sortie du soustracteur (40), un circuit de décision de bouchon (42) et un générateur de données (44),
le circuit de décision de bouchon (42) est prévu pour interpréter les signaux de sortie du filtre passe-bas (41) et pour délivrer des valeurs de bouchon au générateur de données (44) et
le générateur de données (44) est prévu pour commander les actions de bouchon.

7. Système de transmission selon la revendication 5 ou 6, **caractérisé en ce que**
le circuit de synchronisation contient un analyseur de données (38) pour analyser les données arrivantes et pour commander le compteur d'écriture (37) .

8. Système de transmission selon la revendication 5, **caractérisé en ce que**
le régulateur est réalisé sous la forme d'un circuit de décision de bouchon (53) qui est prévu pour générer, au moins une fois pendant chaque trame du signal sortant, un signal de commande qui, si une valeur dérivée de la valeur de sortie du soustracteur (29, 52) est inférieure à une première valeur de seuil, indique une action de bouchon négative et qui, si la valeur dérivée de la valeur de sortie du soustracteur (29, 52) est supérieure à une deuxième valeur de seuil, laquelle est supérieure à la première valeur de seuil, indique une action de bouchon positive et
le compteur de lecture (39, 51) est prévu pour, pendant une plage prédéfinie de chaque trame du signal sortant, générer au moins une double adresse de lecture si le signal de commande indique une action de bouchon positive et sauter au moins une adresse de lecture si le signal de commande indique une action de bouchon négative.

9. Système de transmission selon l'une des revendications 4 à 7, **caractérisé en ce que** le circuit d'adaptation (27; 28) correspondant contient un premier décodeur (31) dont la sortie est connectée à l'entrée de la deuxième mémoire intermédiaire (33) et qui est prévu pour décoder les valeurs d'entrée reçues dans un code à une étape.

10. Système de transmission selon la revendication 9, **caractérisé en ce que**
le premier décodeur (31) est prévu pour convertir en un code Gray les valeurs d'entrée codées en un code dual et
le circuit d'adaptation correspondant comprend une deuxième mémoire intermédiaire (32) dont la sortie est connectée à l'entrée de la première mémoire intermédiaire (33) pour le stockage temporaire des valeurs de sortie délivrées par le premier décodeur (31) et pour la réception à son entrée d'horloge d'un signal corrélé avec les valeurs acheminées et un deuxième décodeur (34) pour convertir en valeurs codées selon le code dual les valeurs de sortie de la première mémoire intermédiaire (33) codées selon le code Gray.

11. Système de transmission selon la revendication 1, **caractérisé en ce que** le comparateur (18, 19) englobe un premier circuit convertisseur (18) et un compteur de comparaison (19), le premier signal d'entrée et le signal auxiliaire (HS) étant acheminés au premier circuit convertisseur (18) pour former le premier signal de comparaison et le premier signal de comparaison pouvant être acheminé à l'entrée de validation du compteur de comparaison (19) et le deuxième signal de comparaison à l'entrée d'horloge du compteur de comparaison (19).

12. Système de transmission selon la revendication 11, **caractérisé en ce que**
le comparateur (18, 19) contient un premier et un deuxième compteur (21, 22), une première bascule (24) et une porte ET (23),
le premier compteur (21) est prévu pour recevoir l'un des signaux d'entrée et pour délivrer un signal de comparaison unique d'une sortie à 1 bit du compteur (21),
la première bascule (24) est prévue pour recevoir le signal auxiliaire (HS) à son entrée d'horloge et pour recevoir le signal délivré par la porte ET (23) à son entrée de bascule, lequel représente une combinaison du signal de comparaison et d'un signal transmis du deuxième compteur (22) et
le deuxième compteur (22) est prévu pour recevoir le signal auxiliaire (HS) à son entrée d'horloge, pour recevoir le signal de sortie inversé de la première bascule (24) à son entrée de validation, pour délivrer le signal transmis de sa sortie transmission et pour délivrer un signal de comparaison unique d'une sortie à 1 bit du deuxième compteur (22).

13. Système de transmission selon la revendication 1, le comparateur (18 à 20) comprenant :
- un premier circuit convertisseur (18) auquel sont acheminés le premier signal d'entrée et le signal auxiliaire (HS) et qui forme le premier signal de comparaison,
- un deuxième circuit convertisseur (20) auquel sont acheminés le deuxième signal d'entrée et le signal auxiliaire (HS) et qui forme le deuxième signal de comparaison,
- un compteur de comparaison (19) qui est prévu pour recevoir à son entrée de validation le premier signal de comparaison généré par le premier circuit convertisseur (18) et à son entrée d'horloge le deuxième signal d'entrée sous la forme d'un deuxième signal de comparaison, ou qui est prévu pour recevoir à son entrée de validation le premier signal d'entrée sous la forme d'un premier signal de comparaison et à son entrée d'horloge le deuxième signal de comparaison généré par le deuxième circuit convertisseur (20), ou qui est prévu pour recevoir à son entrée de validation le premier signal de comparaison généré par le premier circuit convertisseur (18) et à son entrée d'horloge le deuxième signal de comparaison généré par le deuxième circuit convertisseur (20).

14. Système de transmission selon la revendication 13, **caractérisé en ce que** l'un des circuits de comparaison (18, 20) est prévu pour former un signal de comparaison unique à partir de l'un des signaux d'entrée, lequel présente au centre la même fréquence ou un multiple de la fréquence du signal de comparaison et dont les fronts sont en grande partie décalés par rapport aux fronts du signal de comparaison ou du signal de sortie.
